# EUROPEAN PATENT APPLICATION

(11) **EP 4 851 974 A1**
(43) Date of publication of application: **09.12.2026**
(21) Application number: 25886213.5
(22) Date of filing: 01.10.2025
(51) Int. Cl.: G09B 9/00, G09B 5/02, G09B 19/00, H01M 10/04

(54) **TRAINING SIMULATION DEVICE AND USER TRAINING METHOD USING TRAINING SIMULATION DEVICE**

(30) Priority: 01.11.2024 KR 20240153119
(71) Applicant: LG Energy Solution, Ltd., Seoul 07335 (KR)
(72) Inventor: JUNG, Giteck, Daejeon 34122 (KR); KIM, Yongnam, Daejeon 34122 (KR)
(74) Representative: BCKIP Part mbB
(86) International application number: PCT/KR2025/015578
(87) International publication number: WO 2026/095387

(57) **Abstract**

A training simulation device according to an embodiment of the present invention trains a battery manufacturing process and comprises: at least one processor; a memory storing at least one command executed through the at least one processor; and a user interface unit for visualizing and outputting a result of performing the at least one command, wherein the at least one command comprises: a command for implementing a process result according to a material input to the process and a condition input to the process; a command for determining an operating state of virtual model equipment that performs one or more processes; and a command for implementing a 3D operation of the virtual model equipment for the one or more processes, and the one or more processes may include a tab fusion and cover tape attachment process of a cylindrical battery.

## Description

### [Technical Field]

This application claims priority to and the benefit of Korean Patent Application No.10-2024-0153119 filed in the Korean Intellectual Property Office on November 1, 2024 the entire contents of which are incorporated herein by reference.

The present invention relates to a training simulation apparatus and a user training method using the training simulation apparatus, and more particularly, to a training simulation apparatus for training of a winder process during a battery manufacturing process and a user training method using the training simulation apparatus.

### [Background Art]

Secondary batteries, capable of recharging and reuse, may be used as an energy source for small devices such as mobile phones, tablet PCs and vacuum cleaners, and also used as an energy source for medium and large devices such as personal mobility, automobiles and an energy storage system (ESS) for smart grids. Secondary batteries are used in assemblies, such as battery modules, where a plurality of battery cells are connected in series and parallel, or battery packs, where battery modules are connected in series and parallel, depending on system requirements.

Recently, the growth of the electric vehicle and energy storage device markets has led to a rapid increase in demand for the development and production of secondary batteries. To meet this growing demand, the number of secondary battery production plants has also increased. However, there is a significant shortage of skilled workers to operate these secondary battery production plants.

Furthermore, while training and education for new workers was traditionally conducted through observing and learning from experienced workers, the busy secondary battery production schedule has made long-term training and education difficult. In addition, the retirement of workers has made it difficult to secure a sufficient number of skilled workers. Furthermore, even if workers are trained in general plant operation methods, it is difficult to ensure that they are able to respond promptly to various types of defects that arise during plant operation.

To address these issues, workers involved in secondary battery production are trained on how to operate secondary battery production equipment and how to respond to defects using simulators before they begin work. However, as battery types and specifications evolve, the secondary battery production process also requires adaptation. Consequently, the devices used to simulate secondary battery production processes also require appropriate modifications.

Among the prior art documents relevant to the present invention, KR 10-2023-0076655 A is of some relevance.

### [Detailed Description of the Invention]

### [Technical Problem]

To obviate one or more problems of the related art, embodiments of the present disclosure provide a simulation apparatus for training a winder process during a battery manufacturing process.

To obviate one or more problems of the related art, embodiments of the present disclosure also provide a user training method using the training simulation apparatus (simulator).

### [Technical Solution]

In order to achieve the objective of the present disclosure, an apparatus configured to simulate for training of a battery manufacturing process may include at least one processor; a memory for storing at least one instruction executed by the at least one processor; and a user interface configured to visualize and output one or more results of the execution of the at least one instruction.

The at least one instruction may include an instruction to implement one or more process results according to material which is supplied to the process and condition which is input to the process, an instruction to determine an operational state of virtual model equipment performing one or more process steps included in the process, and an instruction to implement a 3D motion of the virtual model equipment for the one or more process steps, wherein the one or more process steps include a tab welding step and a cover tape attaching step for a cylindrical battery.

The tab welding step and the cover tape attaching step may be included in a winder process.

The simulation apparatus may further include a 3D training system configured to implement 3D equipment operation through virtual Human-Machine Interface (HMI) control and virtual quality monitoring, using a virtual equipment training scenario module; and a simulation engine configured to generate one or more equipment operation events and quality data according to equipment operation training.

The simulation engine may operate using a real-time discrete event simulation module.

The user interface may further include a condition setting device for setting conditions of one or more adjustment parameters for determining the operation of the virtual model equipment based on user input; an equipment operation device that operates and displays the virtual model equipment according to the adjustment parameters; and a quality verification device that displays quality information related to the quality of a material produced by the virtual model equipment.

The at least one instruction may further include an instruction to cause the virtual model equipment to perform operation that changes as the condition of adjustment parameters input through the user interface is adjusted.

According to another embodiment of the present disclosure, a user training method using a training simulator may include implementing one or more process results according to material which is supplied to the process and condition which is input to the process; determining an operational state of virtual model equipment performing one or more process steps included in the process; and implementing a 3D motion of the virtual model equipment for the one or more process steps, wherein the one or more process steps include a tab welding step and a cover tape attaching step for a cylindrical battery.

The tab welding step and the cover tape attaching step may be included in a winder process.

The training simulator may include a 3D training system configured to implement 3D equipment operation through virtual Human-Machine Interface (HMI) control and virtual quality monitoring, using a virtual equipment training scenario module; and a simulation engine configured to generate one or more equipment operation events and quality data according to equipment operation training.

The simulation engine may operate using a real-time discrete eve

The training simulator may include a condition setting device for setting conditions of one or more adjustment parameters for determining the operation of the virtual model equipment based on user input; an equipment operation device that operates and displays the virtual model equipment according to the adjustment parameters; and a quality verification device that displays quality information related to the quality of a material produced by the virtual model equipment.

The method may further include controlling the virtual model equipment to perform operation that changes as the condition of adjustment parameters input through the condition setting device is adjusted.

### [Advantageous Effects]

According to embodiments of the present disclosure, the on-site adaptation period for new workers entering the secondary battery manufacturing process can be shortened, and the basic skills and proficiency of the worker required for production can be quickly improved.

Furthermore, even when the equipment for factory expansion is not yet installed, worker training using a simulator can be conducted, thereby improving yields early on.

### [Brief Description of the Drawings]

FIG. 1 is a schematic diagram of a battery manufacturing process.
FIG. 2 is a diagram illustrating an example of a user interface of a simulation apparatus according to embodiments of the present invention.
FIG. 3 illustrates an example of simulation for winder process training according to embodiments of the present invention.
FIG. 4 is a flowchart exemplarily illustrating the operation process of a training simulation apparatus according to embodiments of the present invention.
FIG. 5 is a schematic diagram illustrating the operation of a simulation apparatus according to embodiments of the present invention.
FIG. 6 is a block diagram of a simulation apparatus according to embodiments of the present invention.
FIG. 7 is a flowchart illustrating an operation of a user training method using a simulation apparatus according to embodiments of the present disclosure.
   100: training simulation apparatus
   110: condition setting device
   120: equipment operation device
   130: quality verification device
   510: 3D training system
   520: simulation engine

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

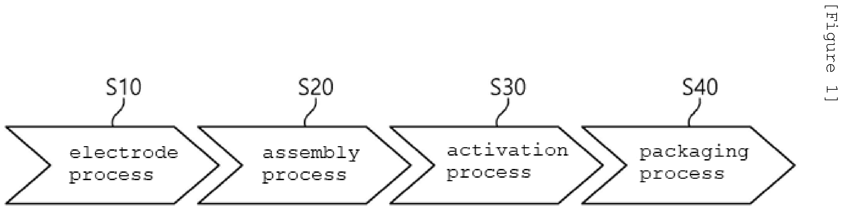

FIG. 1 is a schematic diagram of a battery manufacturing process.

Secondary batteries may be manufactured through an electrode process S10, an assembly process S20, an activation process S30, and a packaging process S40. A completed battery, which has undergone these processes, may be shipped in the form of a battery pack (or battery module) including a plurality of battery cells connected in series. The battery pack may be connected to a load through positive and negative terminals to enable charging and discharging operations. Depending on the requirements of the system in which the battery is used, battery packes may be connected in series or parallel.

More specifically, the electrode process S10 begins with a "mixing process" for mixing raw materials, followed by a "coating process" for applying and drying the mixed slurry onto a foil, a "roll pressing process" for reducing the electrode thickness, a "slitting process" for cutting the electrode, and finally, a "notching process" for creating tabs on the electrode.

In the present disclosure, the "mixing process" may be a process of mixing an active material, a binder, and other additives with a solvent to produce a slurry. For example, a user (or worker) may determine or adjust the addition ratios of the active material, conductive material, additives, binder, etc., to produce a slurry of a specific quality.

The "coating process" may be a process of applying a slurry in a specific amount and shape onto a foil. For example, a user may determine or adjust the die of a coater device, the slurry temperature, etc., to achieve a coating with amount and shape of a specific quality.

The "roll pressing process" may be a process of pressing a coated electrode between two rotating upper and lower rolls to a specific thickness. For example, a user may determine or adjust the gap between the rolls, etc., to increase electrode density and maximize battery capacity through the roll pressing process. Additionally, in the present disclosure, the "slitting process" may be a process of cutting the electrode into a constant width by passing the electrode between two rotating upper and lower knives. For example, a user may determine or adjust various adjustment parameters to maintain a constant electrode width.

The "notching and drying process" may be a process of removing moisture after stamping the electrode into a constant shape. For example, a user may determine or adjust cutting height, length, etc. to stamp out a specific shape. In addition, in the present disclosure, the "lamination process" may be a process of sealing and cutting the electrode and separator. For example, a user may determine or adjust values corresponding to the x-axis and y-axis to achieve a specific cutting quality.

Meanwhile, the assembly process S20 may be a process of assembling the positive and negative electrode plates completed through the electrode process by adding a separator and electrolyte to the electrode plates. A method of the assembly process may vary depending on the battery type. Batteries may be categorized into cylindrical, pouch, and prismatic types, and the method of stacking the plates may vary depending on the battery type.

The process of assembling cylindrical batteries may use a "winding" process, which involves rolling both the electrode plates into a paper-like roll with a separator between them. Here, four rolls (positive electrode roll, negative electrode roll, and two separator rolls) are mounted on a winder, wound around a mandrel, and cut to an appropriate size to form a jellyroll. Once the jellyroll is complete, the positive and negative tabs are attached to the jellyroll. The jellyroll is then inserted into a cylindrical battery can, and secured within the can through welding and beading. The battery assembly process may be then completed by injecting electrolyte into the vacuumed can through a nozzle.

Furthermore, the activation process S30 may activate the electrical energy and verify its stability. The final packaging process S40 may modularizes and package the manufactured battery cells.

As illustrated in FIG. 1, producing secondary batteries requires numerous detailed processes, each demanding a high level of work quality. Furthermore, demand for secondary batteries is increasing, leading to a growing need for skilled workers.

Consequently, prior to starting work, workers involved in secondary battery production may be trained using a simulation apparatus on topics such as how to operate secondary battery production equipment and how to respond to defects.

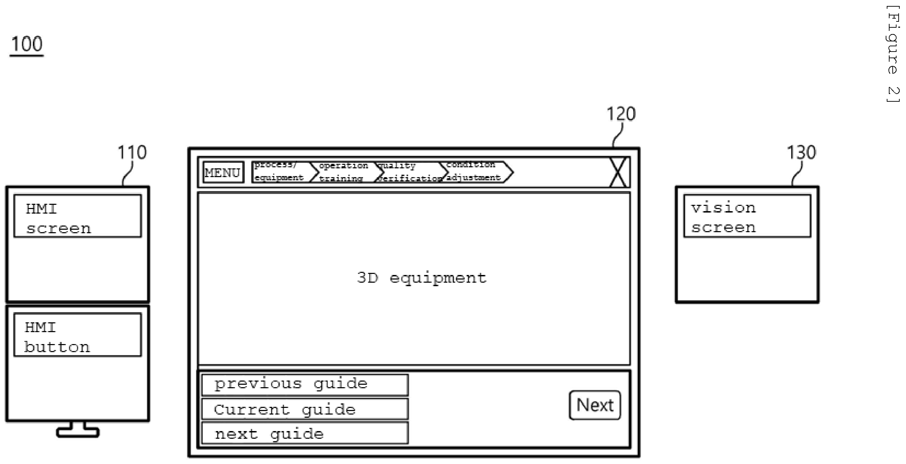

FIG. 2 illustrates an example of a user interface of a simulation apparatus according to embodiments of the present invention.

Referring to FIG. 2, the simulation apparatus 100 may provide various user interfaces to users as a device for training workers (also referred to herein as "users") who manufacture secondary batteries. In the embodiments of the present invention, the simulation apparatus may include, in particular, a simulator for training a process of a winder used in a manufacturing process of a 2170 (21mm diameter, 70mm length) cylindrical battery.

The user interface according to embodiments of the present invention may include a condition setting device 110, an equipment operation device 120, and a quality verification device 130. Accordingly, the user may operate the condition setting device 110, equipment operation device 120, and quality verification device 130 provided by the simulation apparatus, which virtually (e.g., 2D, 3D, etc.) embodies actual secondary battery production equipment, which allows the user to learn how to use secondary battery production equipment (e.g., a winder) or to be trained in how to respond to occurrence of quality deterioration of a manufactured product.

In one embodiment, the condition setting device 110 may be implemented using a Human-Machine Interface (HMI), which is a device implemented to allow a user to adjust one or more adjustment parameters for determining the operation of a virtual model equipment displayed on the equipment operation device 120. A user may control start and stop operation of the equipment through the condition setting device 110, and may execute, change, and/or correct the operation of the 2D/3D virtual model equipment by changing at least some condition of the adjustment parameters. In other words, the operation of the virtual model equipment may be adaptively changed or corrected based on changes in the adjustment parameters input by the user.

The equipment operation device 120 may be implemented using a virtual model equipment associated with the production of secondary batteries. Here, the virtual model equipment may include 2D/3D virtual model equipment/devices associated with secondary battery production equipment, such as a mixer, coater, slitter, winder, roll presser, lamination device, and L&S (lamination & stack) device.

More specifically, the equipment operation device 120 may provide a 3D representation of the materials input into a winder process and outputs thereof. The equipment operation device 120 may also verify the operating/operational state (start, stop, and individual component operations) of the equipment (i.e., the virtual model equipment) and provide a 3D representation of detailed operations for detailed processes of a cylindrical winder. The implementation and provision of these operations may be implemented along an automatic path line from the start to the end of the process. The detailed processes of the cylindrical winder according to embodiments of the present disclosure may particularly include tab welding (or tab fusing) and cover tape attaching process steps during the winder process.

According to embodiments, a user may operate the virtual model equipment or change its configuration through input to the virtual model equipment represented by the equipment operation device 120. Here, the user may check or zoom in/out any area of the virtual model equipment by switching views, etc., and may operate the virtual model equipment or change its configuration by performing touch input, etc.

Meanwhile, the equipment operation device 120 of the simulation apparatus may operate through stages such as a process and equipment guide stage, a material preparation stage, an operation training stage, a case training stage, and a testing stage. Through these stages, the user may be trained in operating the secondary battery production equipment.

In the process and equipment guide stage, one or more secondary battery production processes or equipment may be explained. The material preparation stage may prepare the materials required for the process. The operation training stage may allow a user to check the work standards and process conditions and to be trained in the winder operation. The case training stage may be a stage where the user repeatedly processes or resolves a plurality of failure scenarios associated with the secondary battery production equipments, individually or in combination, to master failure resolution methods. Additionally, the case testing stage may be a stage to evaluate the user's operational capabilities by testing the user's process for resolving a failure scenario.

The quality verification unit 130 may display quality information related to the quality of materials produced by the virtual model equipment through a vision screen. Here, the quality information may be generated by performing calculations on quality parameters, etc., based on predetermined criteria and/or algorithms. In other words, a user may verify quality information generated in response to changing adjustment parameters or operating the virtual model equipment through the quality verification unit 130.

In particular, embodiments of the present disclosure provide a training simulation apparatus for training of a winder process during the battery manufacturing process and a user training method using the same.

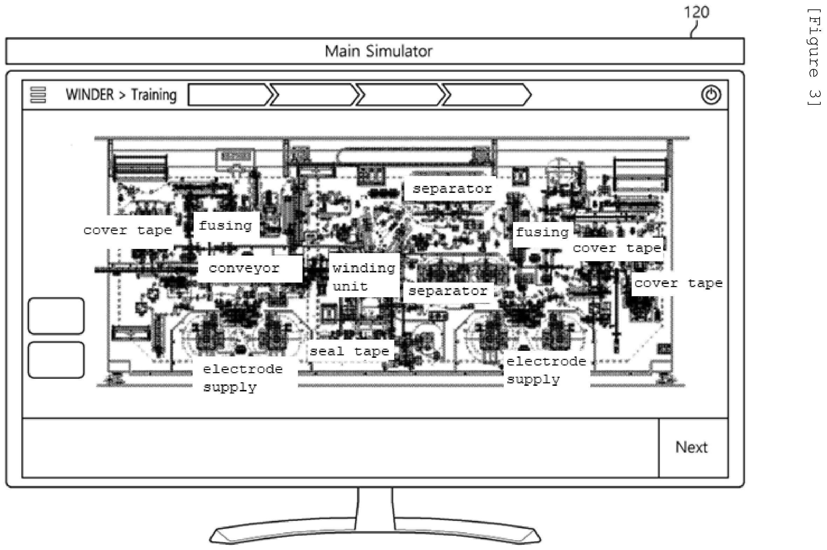

FIG. 3 illustrates an example of simulation for winder process training according to embodiments of the present invention.

The embodiment in FIG. 3 illustrates an HMI screen specifically configured for a winder process used to manufacture cylindrical 2170 batteries, and an example of a simulator screen implementing 3D equipment operation and product changes for each detailed process.

The main simulator screen is an example of the equipment operation device 120 according to embodiments of the present disclosure, displaying 3D equipment operation and product change for each detailed winder process. Here, the 3D equipment operation for each detailed winder process may include operations utilizing electrode supply, conveyor, seal tape, conveyor, welding/fusing, cover tape, winding unit, and separator film, as illustrated in FIG. 3. More specifically, the equipment operation for each detailed winder process may include operations such as adjusting the tab welding position, adjusting the tab protrusion length, adjusting the tab protection tape position, adjusting the horn (welding equipment component) inclination, and replacing the welding equipment component. Here, the 3D equipment operation for each detailed winder process may be implemented using 3D rendering and animation techniques to depict the operation of each piece of equipment.

Meanwhile, depending on the scenario for each training stage, virtual model equipment may be operated, and guidance information such as the types of adjustment parameters to be operated for verification and adjustment, values of the adjustment parameters, operation buttons, and 3D model devices may be displayed or output. Specifically, work instructions may be displayed or output on the equipment operation device, and certain areas of the screen may be illuminated or activated to allow a user to perform tasks corresponding to the work instructions. Here, the user may operate the equipment operation device corresponding to the work instructions and input setting values. Upon completion of a task, the next step may be initiated, or a button (e.g., NEXT button) for proceeding with the next step may be displayed or activated. Thus, the user may be trained in the winder operation for secondary battery production based on this displayed information.

In this way, the present disclosure can build a cylindrical battery winder process into a virtual environment identical to the actual one through 3D modeling and animation. The virtual environment according to embodiments of the present invention may be configured to be an identical working environment to the actual one by reflecting the movement path of an actual worker. In addition, the internal operation of the equipment, which cannot be seen during actual equipment operation, may be implemented using 3D rendering and animation techniques. In particular, the training simulation apparatus according to embodiments of the present invention may be implemented so that an operator can operate the virtual equipment in a virtual space with the same working conditions and environment as the actual one for the winder process of a cylindrical 2170 battery, thereby enabling training of the winder process.

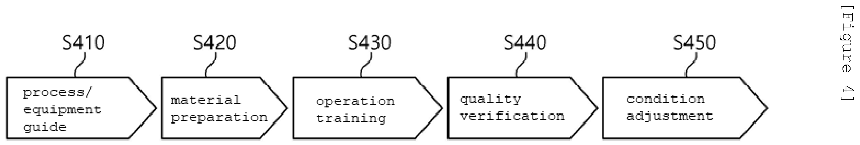

FIG. 4 is a flowchart exemplarily illustrating the operation process of a training simulation apparatus according to embodiments of the present invention.

As illustrated, the simulation apparatus may operate through processes such as a process and equipment guide step S410, a material preparation step S420, an operation training step S430, a quality verification step S440, and a condition adjustment step S450. In other words, a user can be trained in operating secondary battery production equipment through these steps. The process illustrated in FIG. 4 is exemplary, and thus, additional steps may be included, or one or more of the described steps may be omitted.

The process and equipment guide step S410 may be a step describing a secondary battery production process or equipment. If the 3D model device is a winder, the description of the production process or equipment may include a description of a jelly roll configuration (positive electrode, negative electrode, separators 1 and 2, seal tape) and a description of the winder equipment. Here, the description of the winder equipment may include descriptions of an electrode unwinder, tab welding unit, cover tape attaching unit, separator unwinder, seal tape attaching unit, winding unit, conveyor transport unit, work table/waste bin, and their components.

In the material preparation step S420, materials required for the process may be prepared, which can be accomplished through electrode replacement, separator replacement, connection tape replacement, seal tape replacement, cover tape replacement, and welding horn/anvil replacement.

In the operation training step S430, a user may identify the work standards and process conditions and be trained in the winder operation.

The quality verification step S440 may verify the quality of the process results by inspecting the jelly roll appearance, meandering, jelly roll core input, and jelly roll internal dimensions. The jelly roll appearance inspection may include inspection items such as total height, tab protrusion length, seal tape attachment location, and meandering. The meandering inspection may include an X-ray inspection. Meanwhile, the jellyroll core input quantity may include the remaining separator amount, core input amount, and separator input amount. Furthermore, the jellyroll internal dimensions may include electrode length, tab forming height, seal tape position/length, and tab height/length.

In the condition adjustment step S450, the conditions or values of adjustment parameters determined to require adjustment through quality verification may be changed. In the winder process, adjustment parameters may include tab forming height, meandering, input amount, welding/fusing condition, cover tape condition, electrode length, and seal tape length/position.

In addition, although not shown, a testing step may be included to assess the user's operational ability by testing the user's process of completing training scenarios. For example, when a user completes each training scenario, the user's operational ability may be measured or evaluated based on the duration of each training scenario, loss value, etc. By checking these operational abilities and test pass/fail results, the user can further learn or be trained on any training scenarios that are lacking.

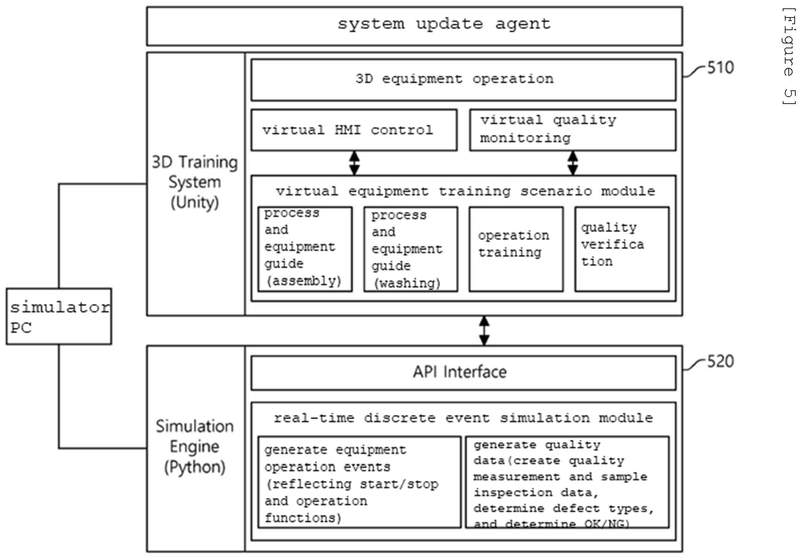

FIG. 5 is a schematic diagram illustrating the operation of a simulation apparatus according to embodiments of the present invention.

The simulation apparatus according to an embodiment of the present disclosure may include a 3D training system 510 that implements 3D equipment operation through virtual HMI control and virtual quality monitoring using virtual equipment training scenario modules based on process and equipment guidance, operation training, and quality verification, and a simulation engine 520 that generates equipment operation events and quality data.

According to another embodiment, the simulation apparatus of the present disclosure may be implemented as separate hardware from the 3D training system 510 and the simulation engine 520, and configured to interact with each other. The 3D training system 510 and the simulation engine 520 may be linked to a simulator PC (including the main simulator, HMI, and vision screen). Furthermore, the 3D training system 510 and the simulation engine 520 may be implemented as part of a system update agent or may be implemented in conjunction with the system update agent.

Here, the simulation engine 520 may operate using a real-time discrete event simulation module. The real-time discrete event simulation module may generate equipment operation events (reflecting start/stop and operation functions) and generate quality data. The quality data may include quality measurement and sample inspection data, defect types, and the results of determining whether a product is good or bad. The simulation engine 520 may be connected and communicate with the 3D training system 510 via an application programming interface (API).

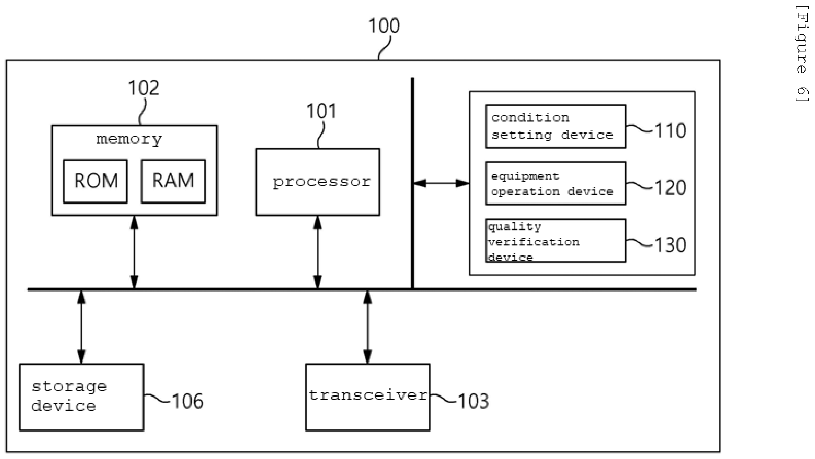

FIG. 6 is a block diagram of a simulation apparatus according to embodiments of the present invention.

The simulation apparatus 100 according to an embodiment of the present disclosure is a simulation apparatus for training a winder process, and the simulation apparatus 100 may include at least one processor 101, a memory 102 for storing at least one instruction executed by the processor, and a transceiver 103 connected to a network for communication.

The at least one instruction may include an instruction to implement one or more process results according to material which is supplied to the process and condition which is input to the process, an instruction to determine an operational state of virtual model equipment performing one or more process steps included in the process, and an instruction to implement a 3D motion of the virtual model equipment for the one or more process steps, wherein the one or more process steps include a tab welding step and a cover tape attaching step for a cylindrical battery.

The tab welding step and the cover tape attaching step may be included in a winder process.

The simulation apparatus may further include a 3D training system configured to implement 3D equipment operation through virtual Human-Machine Interface (HMI) control and virtual quality monitoring, using a virtual equipment training scenario module; and a simulation engine configured to generate one or more equipment operation events and quality data according to equipment operation training.

The simulation engine may operate using a real-time discrete event simulation module.

The simulation apparatus 100 may further include a user interface which includes a condition setting device 110 for setting conditions of one or more adjustment parameters for determining the operation of the virtual model equipment based on user input; an equipment operation device 120 that operates and displays the virtual model equipment according to the adjustment parameters; and a quality verification device 130 that displays quality information related to the quality of a material produced by the virtual model equipment.

The at least one instruction may further include an instruction to cause the virtual model equipment to perform operation that changes as the condition of adjustment parameters input through the user interface is adjusted.

Meanwhile, at least one processor 101 of the simulation apparatus 100 may be connected to the condition setting device 110, the equipment operation device 120, and the quality verification unit 130 to exchange data or information related to the virtual model equipment. Although FIG. 6 illustrates the simulation apparatus 100 as including a condition setting device 110, an equipment operation device 120, and a quality verification device 130, the condition setting device 110, the equipment operation device 120, and the quality verification device 130 may each be implemented as separate hardware (e.g., a user interface) that works in conjunction with the simulation apparatus 100.

The processor 101 may execute, modify, or correct the operation of the 3D virtual model equipment displayed on the equipment operation device 120 according to user operations. According to one embodiment, the processor 101 may acquire or receive user behavior information and user condition information using information input from a user (worker who manufactures secondary batteries). The processor 101 may also determine or modify the operation of the virtual model equipment using the acquired or received user action information and user condition information.

The user action information may be information generated based on user input, such as touching at least a portion of a virtual model equipment included in the equipment operation device 120. The user action information may include information regarding changes in the settings of virtual model equipment based on the user input.

The user condition information may be information generated based on user input that changes the conditions or values of at least some of the adjustment parameters included in the condition setting device 110. The user condition information may include information regarding changes in the condition values used to determine the operation of the virtual model equipment based on the user input.

When the virtual model equipment is operated based on the user condition information or user action information, the processor 101 may determine or generate quality information related to the quality of the material produced by the operation of the virtual model equipment. In other words, when the virtual model equipment is operated (when animations, videos, etc. are executed by the virtual model equipment), quality information may be determined or generated differently based on the settings and conditions of the virtual model equipment. In other words, a user may change or adjust the quality of a material produced by the virtual model equipment by changing or setting adjustment parameters by touching input, etc. at least a portion of the virtual model equipment.

The processor 101 may determine or extract one or more quality parameters for determining the quality of the material produced by the virtual model equipment and calculate values corresponding to each of the one or more quality parameters determined based on the operation of the virtual model equipment while the virtual model equipment is operating. Here, the values corresponding to the quality parameters may be calculated using a predetermined algorithm. Furthermore, the processor 101 may generate quality information associated with the quality of the material produced by the virtual model equipment based on the values corresponding to each of the one or more calculated quality parameters.

In addition, the processor 101 may use the corrected quality information to determine whether one or more failure scenarios have been resolved. If one or more failure scenarios are determined to have been resolved, the processor 101 may calculate the progress time, loss value, etc. of one or more failure scenarios during the execution of one or more failure scenarios. For example, the loss value may include a coating loss value, a material loss value, etc., and may be calculated through a predetermined algorithm based on the user's response time, values entered by the user, etc. Additionally, the processor 101 may determine whether the user passes the simulation training based on the operational capability information for each abnormality scenario, if the user has resolved all types of predetermined abnormality scenarios.

Meanwhile, the simulator 100 according to embodiments of the present invention may further include a storage device 106. Here, the processor 101 may mean a central processing unit (CPU), a graphics processing unit (GPU), or a dedicated processor on which methods according to embodiments of the present invention are performed. The memory (or storage unit) may include at least one of a volatile storage medium and a non-volatile storage medium. For example, the memory may include at least one of read only memory (ROM) and random access memory (RAM).

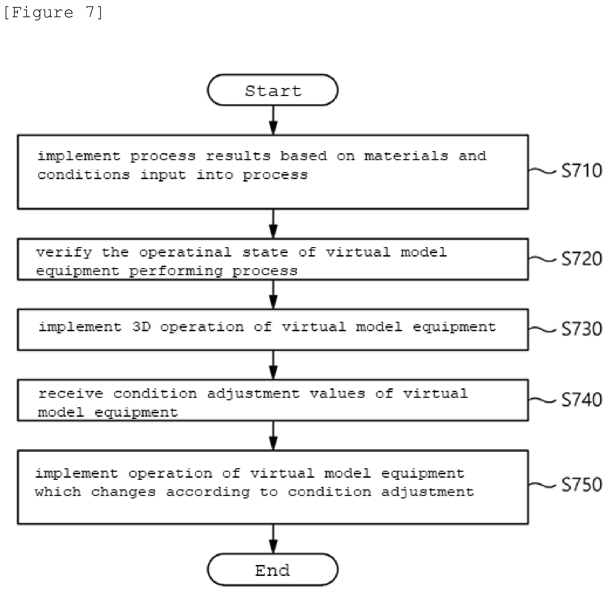

FIG. 7 is a flowchart illustrating an operation of a user training method using a simulation apparatus according to embodiments of the present disclosure.

The user training method using a simulation apparatus according to embodiments of the present disclosure is a user training method using a simulator that trains a worker in the winder process during a battery manufacturing process.

Referring to FIG. 7, the training simulator according to embodiments of the present disclosure may implement process results based on materials and conditions which are input into the process battery manufacturing process (S710). Here, the battery manufacturing process may include tab welding and cover tape attaching process steps during a winder process of a cylindrical battery.

The training simulator may also verify the operatinal state of virtual model equipment performing one or more process steps (S720) and implement 3D operation of the virtual model equipment (S730).

Here, the training simulator may include a 3D training system configured to implement 3D equipment operation through virtual Human-Machine Interface (HMI) control and virtual quality monitoring using a virtual equipment training scenario module, and a simulation engine configured to generate equipment operation events and to generate quality data based on operation training. The simulation engine may operate using a real-time discrete event simulation module.

Meanwhile, when the conditions of adjustment parameters input through the condition setting device of the user interface are adjusted (S740), the operation of the virtual model equipment may be implemented to change according to adjusted condition values of the adjustment parameters (S750).

Here, the user interface may include a condition setting device that sets the conditions of one or more adjustment parameters for determining the operation of the virtual model equipment based on user input; an equipment operation device that operates and displays the virtual model equipment according to the adjustment parameters; and a quality verification device that displays quality information related to the quality of the material produced by the virtual model equipment.

Here, the user may input the conditions and/or condition adjustment values of the adjustment parameters for determining the operation of the virtual model equipment through the condition setting device (e.g., an HMI).

According to the embodiments of the present invention described above, the on-site adaptation period for new workers entering the secondary battery manufacturing process can be shortened and the basic skills and proficiency of workers required for battery manufacturing can be improved early.

Additionally, since worker training using a simulator is possible even when the equipment is not installed during factory expansion, yield can be improved shortly.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An apparatus configured to simulate for training of a battery manufacturing process, the apparatus comprising:
at least one processor;
a memory for storing at least one instruction executed by the at least one processor; and
a user interface configured to visualize and output one or more results of the execution of the at least one instruction,
wherein the at least one instruction includes:
an instruction to implement one or more process results according to material which is supplied to the process and condition which is input to the process;
an instruction to determine an operational state of virtual model equipment performing one or more process steps included in the process; and
an instruction to implement a 3D motion of the virtual model equipment for the one or more process steps,
wherein the one or more process steps include a tab welding step and a cover tape attaching step for a cylindrical battery.

2. The apparatus of claim 1, wherein the tab welding step and the cover tape attaching step are included in a winder process.

3. The apparatus of claim 1, further comprising:
a 3D training system configured to implement 3D equipment operation through virtual Human-Machine Interface (HMI) control and virtual quality monitoring, using a virtual equipment training scenario module; and
a simulation engine configured to generate one or more equipment operation events and quality data according to equipment operation training.

4. The apparatus of claim 3, wherein the simulation engine operates using a real-time discrete event simulation module.

5. The apparatus of claim 1, wherein the user interface includes:
a condition setting device for setting conditions of one or more adjustment parameters for determining the operation of the virtual model equipment based on user input;
an equipment operation device that operates and displays the virtual model equipment according to the adjustment parameters; and
a quality verification device that displays quality information related to the quality of a material produced by the virtual model equipment.

6. The apparatus of claim 1, wherein the at least one instruction further includes:
an instruction to cause the virtual model equipment to perform operation that changes as the condition of adjustment parameters input through the user interface is adjusted.

7. A user training method using a training simulator for training of a battery manufacturing process, comprising:
implementing one or more process results according to material which is supplied to the process and condition which is input to the process;
determining an operational state of virtual model equipment performing one or more process steps included in the process; and
implementing a 3D motion of the virtual model equipment for the one or more process steps,
wherein the one or more process steps include a tab welding step and a cover tape attaching step for a cylindrical battery.

8. The method of claim 7, wherein the tab welding step and the cover tape attaching step are included in a winder process.

9. The method of claim 7, wherein the training simulator includes:
a 3D training system configured to implement 3D equipment operation through virtual Human-Machine Interface (HMI) control and virtual quality monitoring, using a virtual equipment training scenario module; and
a simulation engine configured to generate one or more equipment operation events and quality data according to equipment operation training.

10. The method of claim 9, wherein the simulation engine operates using a real-time discrete event simulation module.

11. The method of claim 9, wherein the training simulator further includes:
a condition setting device for setting condition of one or more adjustment parameters for determining the operation of the virtual model equipment based on user input;
an equipment operation device that operates and displays the virtual model equipment according to the adjustment parameters; and
a quality verification device that displays quality information related to the quality of a material produced by the virtual model equipment.

12. The method of claim 7, further comprising:
controlling the virtual model equipment to perform operation that changes as the condition of adjustment parameters input through the condition setting device is adjusted.
